Europäisches Patentamt

European Patent Office

Office européen des brevets

(19)

(11) Veröffentlichungsnummer: **0 007 352**
**B1**

(12) **EUROPÄISCHE PATENTSCHRIFT**

(45) Veröffentlichungstag der Patentschrift: **23.06.82**

(21) Anmeldenummer: **78900108.8**

(22) Anmeldetag: **05.09.78**

(86) Internationale Anmeldenummer:
**PCT/EP78/00014**

(87) Internationale Veröffentlichungsnummer:
**WO 79/00132 22.03.79 Gazette 79/6**

(51) Int. Cl.³: **C 04 B 5/02, B 01 J 2/04,
B 22 F 9/00, C 21 B 3/06,
C 03 B 1/00**

(54) Granulat aus Schmelzen und Verfahren und Vorrichtung zu dessen Herstellung.

(30) Priorität: **06.09.77 DE 2740097**

(43) Veröffentlichungstag der Anmeldung:
**06.02.80 Patentblatt 80/3**

(45) Bekanntmachung des Hinweises auf die Patenterteilung:
**23.06.82 Patentblatt 82/25**

(84) Benannte Vertragsstaaten:
**DE**

(56) Entgegenhaltungen:
**DE - C - 242 943**
**FR - A - 325 576**
**FR - A - 2 260 376**
**FR - A - 2 260 542**
**US - A - 3 752 611**

(73) Patentinhaber: **SVENSKT STAL AKTIEBOLAG**
**Box 16344**
**S-103 26 Stockholm (SE)**

(72) Erfinder: **TIBERG, Nils**
**Stenviksvägen 72**
**S-613 00 Oxelösund (SE)**

(74) Vertreter: **Neugebauer, Erich, Dr.**
**Postfach 31**
**D-8000 München 26 (DE)**

Courier Press, Leamington Spa, England.

Granulat aus Schmelzen und Verfahren und Vorrichtung zu dessen Herstellung

Die Erfindung betrifft ein Granulat aus Schmelzen und ein Verfahren und eine Vorrichtung zu dessen Herstellung.

Es ist ein Verfahren zur Granulation von Hochofenschlacke und anderen Schmelzen durch Hüttensand bekannt, bei dem glühende flüssige Schlacke mittels einer Rinne in breitem, dünnem Bande in die Nähe eines Trichters geleitet wird, aus dem Hüttensand auf eine rasch rotierende Trommel in breiter Schicht herabläuft. Diese Trommel schleudert den Hüttensand gegen das Band flüssiger Schlacke, zerreißt es in kleine Partikel und granuliert dadurch die flüssige Schlacke. Gegebenenfalls werden entweder dem Hüttensand oder in die Schlackenrinne Zuschläge beigemischt, welche die Zementbildung günstig beeinflussen (DE—C—242 943).

Weiter ist ein Verfahren zum Granulieren von metallurgischen Schlacken, z.B. von Stahlschlacken aus Konvertern bekannt, bei dem das Granulieren direkt unterhalb des Konverters erfolgt, indem der Schlackestrom, der während des Entschlackens abkühlt, mittels midestens eines Gasstroms, der aus einer horizontal angeordneten Düse quer zu dem Schlackestrom gerichtet ist, granuliert wird. Der zeitliche Ablauf des Verfahrens wird bezüglich der Länge des Granulatstroms so gesteuert, daß das Granulat an der Atmosphäre erstarren kann (BE—A—623 084).

Jedoch weisen alle bisher bekannten Verfahren zum Granulieren von Schmelzen, insbesondere von Schlackenschmelzen, Nachteile auf und sind mit Mängeln behaftet, u.a. kann man das Granulat in Abhängigkeit von dem jeweiligen Verfahren nur in mehr oder weniger begrenztem Umfang verwenden, und es geht auch der Wärmeinhalt der Schlackenschmelze weitgehend verloren.

Der vorliegenden Erfindung liegt die Aufgabe zugrunde, ein Verfahren und eine Vorrichtung zum Granulieren von Schlackenschmelzen, Glasschmelzen, Keramikschmelzen, Metallschmelzen und Schmelzen aus Metallegierungen, insbesondere von Hochofenschlackenschmelzen zu schaffen, die es erlauben, die Schmelzen unter energetisch günstigen Bedingungen zu granulieren, wobei das Granulat in Fraktionen mit unterschiedlichen Eigenschaften unterteilbar und eine steuerbare Reaktion und/oder Verbindung der Schmelze mit feinkörnigen Partikeln ermöglicht wird.

Diese Aufgabe wird erfindungsgemäß dadurch gelöst, daß die flüssige Schmelze zu einem dünnen, sich in vorbestimmter Richtung frei bewegenden Schmelzestrahl verbreitert und auseinandergezogen wird und daß die Schmelze in diesem verbreiterten und auseinandergezogenen Zustand durch Zusammentreffen unter einem vorbestimmten Auftreffwinkel (a) mit einer eine im wesentlichen einheitliche Strömungsrichtung und eine hohe Geschwindigkeit relativ zu dem Schmelzestrahl aufweisenden sich im wesentlichen frei bewegenden Strömung aus feinkörnigen festen Partikeln und/oder Gas, insbesondere Schutzgas, in ein sich zumindest über einen Teilbereich des Gegenwinkels (b) zum Auftreffwinkel (a) fächerförmig verteilendes Granulat überführt wird, von dem mindestens eine oder mehrere Fraktionen mittels eines fluidisierten Bettes aufgefangen werden.

Das erfindungsgemäße Verfahren bietet den Vorteil, daß durch die fächerförmige Verteilung des Granulats das Auffangen des heißen Granulats in einem fluidisierten Bett erleichtert wird, wobei das fluidisierende Bett zur Energierückgewinnung verwendet werden kann.

Erfindungsgemäß kann das Granulat beim Aufsammeln in Abhängigkeit von der Entfernung zwischen Aufsammelstelle und der Stelle des Zusammentreffens des Schmelzestrahles mit der Strömung in Fraktionen unterteilt werden. Auf diese Weise kann das Granulat in Fraktionen unterschiedlicher Eigenschaften, insbesondere unterschiedlicher Korngröße, Dichte, und/oder Materialzusammensetzung, unterteilt werden. Dies ist besonders dann von Vorteil, wenn Metallschmelzen oder Schmelzen mit einem beträchtlichen metallischen Anteil granuliert werden und rein metallische bzw. überwiegend metallische Granulatkörner von nicht rein metallischen bzw. nichtmetallischen Granulatkörner getrennt werden sollen.

Weiter bietet das erfindungsgemäße Verfahren den Vorteil, daß die festen, feinkörnigen Partikel durch Auf- und/oder Einschießen in die noch flüssige Schmelze mit dieser im Granulat fest verbunden sind und so eine dauerhafte nicht entmischbare Verbindung von Schmelze und festen Partikeln geschaffen ist. Ferner bietet das erfindungsgemäße Verfahren den Vorteil, daß vorbestimmte Reaktionen zwischen Schmelze und festen Partikeln strattfinden können.

Vorzugsweise ist der Auftreffwinkel (a) zwischen Schmelzestrahl und Strömung ein spitzer Winkel, der vorteilhafterweise zwischen 5° und 90°, vorzugsweise zwischen 20° und 90° liegt. Insbesondere haben sich Auftreffwinkel (a) zwischen 20° und 40° oder zwischen 50° und 70°, vorzugsweise bei 60° als vorteilhaft erwiesen.

Erfindungsgemäß können die festen feinkörnigen Partikel der Strömung aus mindestens einem der Schmelze zuzumischenden Material bestehen, sodaß das Granulat vorzugsweise ein festes Mischungsverhältnis von Schmelzanteil und Anteil an feinkörnigen festen Partikeln aufweist, wie es unmittelbar oder nach Hinzumischung von weiterem Material für einen nachfolgenden Behandlungsprozeß, insbesondere einen Mineralwollespinnprozeß, oder für die Düngemittelherstellung erforderlich ist.

Nach den erfindungsgemäßen Verfahren ist es vorteilhaft, wenn die Schmelze zu einem flüssigen, dünnen Schmelzefilm von vorzugsweise weniger als 10 mm, vorteilhafterweise weniger als 3 mm und insbesondere weniger als 1 mm Dicke verbreitert wird und ein Strahl aus feinkörnigen festen Partikeln mit hoher Geschwindigkeit, vorzugsweise zwischen etwa 5 und 100 m/s, vorteilhafterweise jedoch mit einer Geschwindigkeit zwischen 5 und 50 m/s, insbesondere zwischen 10 und 20 m/s gegen den Schmelzefilm, Vorzugsweise gegen eine Flachseite des Schmelzefilms, gerichtet werden, um diesen in ein im wesentlichen feinkörniges Granulat zu zerteilen.

Erfindungsgemäß wird der mittlere Durchmesser der feinkörnigen Partikel etwa in der Größenordnung, insb. etwa gleich der Dicke des Schmelzefilms, vorzugsweise jedoch kleiner als die Dicke des Schmelzefilms gewählt. Bei der Granulierung von Hochofenschlacken mittels Sand (Siliciumdioxd) als feinkörnigem Material hat sich eine Korngröße des Sandes bis zu 2 mm, vorzugsweise bis zu 1 mm zur Erzielung von feinkörnigem Granulat als vorteilhaft erwiesen. Für spezielle Anwendungen wurde jedoch auch feinkörniges Material mit einer Korngröße bis zu 6 mm verwendet.

Die Verbreiterung der Schmelze zu einem Schmelzefilm kann erfindungsgemäß mittels einer planen Fläche, vorzugsweise in Form einer Platte aus feuerfestem Material, insbesondere aus Graphit, vorgenommen werden. Auf diese Platte läßt man einen Schmelzestrahl auftreffen. Der Schmelzestrahl verbreitert sich hierbei. Dabei kann es vorteilhaft sein, an den Rändern der Platte Begrenzungsleisten vorzusehen, um den Schmelzestrahl seitlich zu begrenzen und diesem eine definierte Breite zu geben. Insbesondere hat es sich als vorteilhaft erwiesen, die Platte zum Zerteilen des Schmelzestrahls in einen dünnen Schmelzefilm vibrieren zu lassen, wobei die Amplituden der Vibrationen in der Ebene der Plattenfläche liegen. Durch derartige Vibrationen in der Ebene der Aufprallfläche wird das Zerteilen des Schmelzestrahles zum Film vorteilhaft beeinflußt. Es kann auch vorteilhaft sein, die Aufprallplatte zum Zerteilen des Schmelzefilms aufzuheizen. Dies kann z.B. mittels Ölbrennern geschehen, die unmittelbar auf die Auftrefffläche der Platte gerichtet werden können. Da der Schmelzefilm, der die Aufprallplatte verläßt, infolge der Oberflächenspannung der Schmelze dazu neigt, sich zu einem runden Strahl wieder zusammenzuziehen, ist es erfindungsgemäß vorteilhaft, die Strömung aus feinkörnigen Partikeln unmittelbar unterhalb der Aufprallplatte gegen den Schmelzefilm zu richten. Der Winkel a, den die Strömung aus feinen Partikeln dabei mit den Schmelzefilm bildet, kann erfindungsgemäß zwischen 5° und 90° liegen, vorteilhafterwiese liegt dieser Winkel jedoch zwischen 50° und 70°, insbesondere bei 60°. Der Winkel, den die Strömung aus feinkörnigen Partikeln mit der Horizontalen bildet, richtet sich in erster Linie nach dem vorgenannten Winkel zwischen dem Schmelzefilm und der Strömung aus festen Partikeln und beträgt etwa 30°, wenn dieser Winkel zwischen dem Schmelzefilm und der Strömung aus festen Partikeln etwa 60° beträgt.

Erfindungsgemäß hat es sich als besonders vorteilhaft erwiesen, das gebildete Granulat in Fraktionen unterteilt aufzusammeln.

Da die Strömung mit hoher Energie auf den Schlackefilm auftrifft, bewegt sich das erhaltene Granulat längs Wurfparabeln nach unten, wobei der Abfall der Wurfparabel der kinetischen Energie entspricht, die die einzelnen Granulatteile durch die Strömung erhalten haben.

Des weiteren entspricht die kinetische Energie, die den Granulatteilen erteilt wird, dem Mischungsverhältnis von feinkörnigen Partikeln und Schmelzeanteilen im Granulat. Ist also der Anteil an feinkörnigen Partikeln sehr hoch, so wird die dem Granulat erteilte kinetische Energie entsprechend groß sein und dementsprechend die Neigung der Wurfparabel relativ gering sein. Das erfindungsgemäße Verfahren ermöglicht es daher, bestimmte Mischungsverhältnisse von Schmelze und feinkörnigem Material dadurch aus dem Granulatstrom auszusondern, daß man unterhalb der Auftreffstelle der Partikel auf den Schmelzefilm und in verschiedenen seitlichen Abständen von dieser Auftreffstelle des Partikelstrahles auf den Schmelzefilm mehrere Auffangeinrichtungen anordnet. In diesen Auffangeinrichtungen werden dann Fraktionen des Granulats mit im wesentlichen einheitlichen Mischungsverhältnissen von Schmelze und feinkörnigem Material erhalten Das erfindungsgemäße Verfahren bietet auch den Vorteil, daß in der Schmelze vorhandene Inhomogenitäten, insbesondere spezifisch schwerere Anteile in einer ersten Fraktion unterhalb des Schmelzefilms aufgefangen werden können. Dies gilt insbesondere für Schmelzen aus Hochofenschlakken, in denen vielfach noch metallische Reste vorhanden sein können. Diese werden dann vom übrigen Granulat ohne weiteres getrennt. Ferner bildet das erfindungsgemäße Verfahren den Vorteil, daß Partien der Schmelze bzw. des Schmelzefilms auf die eine nicht ausreichende Menge an feinkörnigen Partikeln auftrifft und die daher nicht in hinreichend feinkörniges Granulat zerteilt werden, ebenfalls in der ersten Fraktion im wesentlichen unmittelbar unterhalb des Schmelzefilms aufgefangen werden können und von dem übrigen feinkörnigen granulierten Material getrennt bleiben.

Es hat sich als vorteilhaft erwiesen, das Gewichtsverhältnis von feinkörnigem Material der Partikelströmung und Schmelze etwa 1:1 zu wählen. Es kann aber auch vorteilhaft sein, dieses Verhältnis größer, insbesondere etwa gleich 2:1 zu wählen. Die überschüssigen feinkörnigen Partikel werden dann im allgemeinen in der von der Auftreffstelle zwischen der Strömung und dem Schmelzefilm am weitesten entfernten Fraktion aufgefangen und können dann wieder verwendet werden zur Erzeugung der feinkörnige Partikel aufweisenden Strömung.

Das fluidisierte Bett kann die gleichen feinkörnigen Partikel aufweisen, wie die zum Zerteilen des Schmelzefilms dienende Strömung, wobei die Fluidisierung des Bettes durch Einleiten von Wasserdampf und/oder Gasen, insbesondere Schutzgasen, wie z.B. Argon, vorgenommen werden kann. Innerhalb eines derartigen fluidisierten Bettes kann dann eine rasche Abkühlung des Granulats bzw. ein rasches Erstarren von noch flüssigen Schmelzeteilen erzielt werden. Gleichzeitig kann die Wärme der Schmelze auf den Wasserdampf und/oder das Gas übertragen werden, und die Wärme kann zurückgewonnen werden und insbesondere für die Aufrechterhaltung der Partikelströmung und/oder des fluidisierenden Bettes verwendet werden.

Im folgenden wird die Erfindung anhand von Ausführungsbeispielen näher erläutert:

Fig. 1 zeigt eine grob schematische Ansicht einer Vorrichtung zum Durchführen des erfindungsgemäßen Verfahrens,

Fig. 2 und 3 zeigen abgewandelte Vorrichtungen.

Die vorzugsweise direkt vom Hochofen in eine Pfanne kommende Schmelze 1 wird über eine geneigte Rinne 2 einer Prallplatte 4 zugeführt, die mittels einer nicht dargestellten Vibrationseinrichtung Schwingungen in der Aufprallebene, vorzugsweise in Richtung des Pfeiles 6 ausführt. Die Schwingungen können aber auch senkrecht zum Pfeil 6 erfolgen oder mit Komponenten sowohl in Richtung des Pfeiles 6, wie senkrecht dazu. Durch das Auftreffen des Schmelzestrahles auf die Prallplatte 4 wird dieser zu einem Film 8 verbreitert. Eine Strömung 10 aus feinkörnigen Partikeln wird gegen diessen Schmelzefilm 8 mittels einer Beschleunigungseinrichtung 12 geschossen. Diese Beschleunigungseinrichtung 12 besteht aus einem Rad bzw. einer Walze 14 und einem Wurfband 16. Die Beschleunigungseinrichtung schleudert die feinkörnigen Partikel mit einer Geschwindigkeit von vorzugsweise zwischen 5 und 50 m/s, insbesondere zwischen 10 und 10 m/s gegen den Schmelzefilm 8. Die Dicke des Schmelzefilms 8 beträgt vorzugsweise nur wenige mm und ist vorteilhafterweise kleiner als 5 mm, insbesondere kleiner als 3 mm und die Breite des Schmelzefilms beträgt vorzugsweise mehr als 5 cm, insbesondere mehr als 10 cm und vorteilhafterweise liegt sie zwischen 10 und 30 cm, insbesondere bei etwa 15 cm. Bei einer praktischen Ausführungsform des erfindungsgemäßen Verfahrens wurde ein Schmelzestrom aus Hochofenschlacke von etwa 500 bis 700 kg/min der Prallplatte 4 zugeführt und zu einem Film von etwa 15 cm Breite verbreitert. Auf diesen Schmelzefilm wurden 600 bis 1200 kg/min, vorzugsweise etwa 1000 kg/min an feinkörnigen Partikeln mittels des Partikelstromes 10 geschossen und dadurch eine Granulierung des Schmelzefilms erzielt, wobei der Strom 10 etwa die gleiche Breite wie der Schmelzefilm 8 aufwies.

Der Winkel a zwischen dem Schmelzefilm 8 und dem Strahl 10 aus feinkörnigen Partikeln beträgt vorzugsweise 50° bis 70°, mit Vorteil 60°. Dementsprechend beträgt der Winkel der Strömung 10 mit derr Horizontalen 40° bis 20°, insbesondere 30°, wenn angenommen wird, daß der Schmelzefilm 8 sich etwa senkrecht nach unten erstreckt. Das Granulat 15 wird vorzugsweise mittels Trennwänden 20, 22, 24 und 26 in unterschiedlichen Fraktionen A, B, und C aufgefangen. Die Fraktion A umfaßt dabei in erster Linie nicht oder nur unvollkommen granulierte Schmelzeteile, insbesondere Schmelzeklumpen oder dergleichen, aber auch Teile der Schmelze, die besonders hohes spezifisches Gewicht aufweisen, zum Beispiel Metallreste. Die Fraktion B besteht aus gut granuliertem Material mit einem vorbestimmten Mischungsverhältnis von Schmelze und feinkörnigen Partikeln. Die Fraktion C besteht in erster Linie aus feinkörnigem Material und sehr feinkörnigem Granulat, bei dem der Anteil an feinteiligen Partikeln im Verhältnis zum Schmelzeanteil relativ groß ist. Die Fraktion C wird vorzugsweise wieder dem Behälter 18 mit feinkörnigen Partikeln zugeführt und somit zum Partikelstrom 10 zurückgeführt.

Erfindungsgemäß kann das Granulat natürlich in mehr als drei Fraktionen aufgefangen werden, um genauer definierte Mischungsverhältnisse von Schmelze und feinkörnigen Partikeln und/oder Korngrößen des Granulats voneinander zu trennen.

Das Granulat 15 wird insbesondere im Bereich der Fraktion B mittels eines fluidisierten Bettes aufgefangen, um eine schnelle Abkühlung und Verfestigung des Granulats zu erzielen. Die Einwirkzeit der flüssigen Schmelze auf das feinkörnige Material kann dadurch unterschiedlich gewählt werden, daß zwischen dem Punkt des Zusammentreffens von Schmelzefilm 8 und Strömung 10 und der Auffangebene für das Granulat eine unterschiedliche Höhendifferenz gewählt wird. Wird diese Höhendifferenz hinreichend groß gewählt, so ist gewährleistet, daß das Granulat sich beim Auffangen bereits verfestigt hat und dann die Gefahr des Zusammenbackensnicht mehr besteht. Auch kann durch Wahl der Fallhöhe die Reaktionszeit zwischen Schmelze und feinkörnigem Material eingestellt werden, was insbesondere dann von Bedeutung ist, wenn chemische Reaktionen zwischen Schmelze und feinkörnigem Material stattfinden.

Anstelle der Wurfeinrichtung 12 können auch Wurfeinrichtungen verwendet werden, die anstelle des Wurfrades 14 ein zweites Wurfband aufweisen, ähnlich dem Wurfband 16. Das Wurfband 16 erhält dabei vorzugsweise eine langgestreckte, geradlinige Form, wobei das obere Trum eben und nicht geknickt ausgeführt ist, und anstelle des Wurfrades 14 ein zweites, vorzugsweise etwas kürzeres Wurfband oberhalb des ersten Wurfbandes angeordnet wird und das feinkörnige Material zwischen beide Wurfbänder zugeführt wird.

Zur Beschleunigung der feinkörnigen Partikel kann auch auschließlich oder in Kombination mit den vorgenannten Beschleunigungseinrichtungen Druckluft oder Druckgas, insbesondere Schutzgas z.B. Argon verwendet werden.

Die festen feinkörnigen Partikel bestehen vorzugsweise aus Sand (Siliciumdioxd), aus kornförmigen Ferrolegierungen, kornförmigem keramischem Material oder aus Granitpulver, das einen niedrigeren Schmelzpunkt als Siliciumdioxd hat und daher energetisch günstiger ist.

Erfindungsgemäß kann die auf das Granulat 15 und/oder die nicht mit der Schmelze verbundenen feinkörnigen Partikeln übertragene Wärme beim Auffangen des Granulates bzw. des feinkörnigen Materials rückgewonnen werden, indem man unterhalb der Auffangebene einen Wärmetauscher insbesondere in Form von Rohrschlangen anordnet. Die rückgewonnene Wärme kann als Energie für die Aufrechterhaltung der feinkörnigen Partikelströmung und/oder des fluidisierenden Bettes verwendet werden.

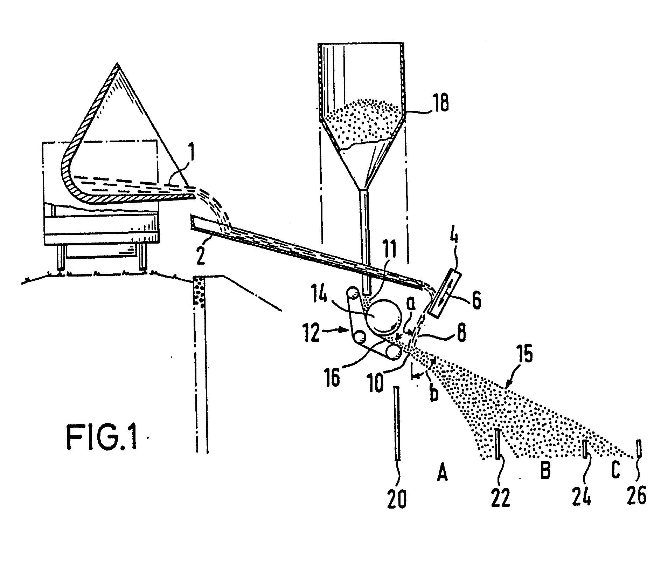

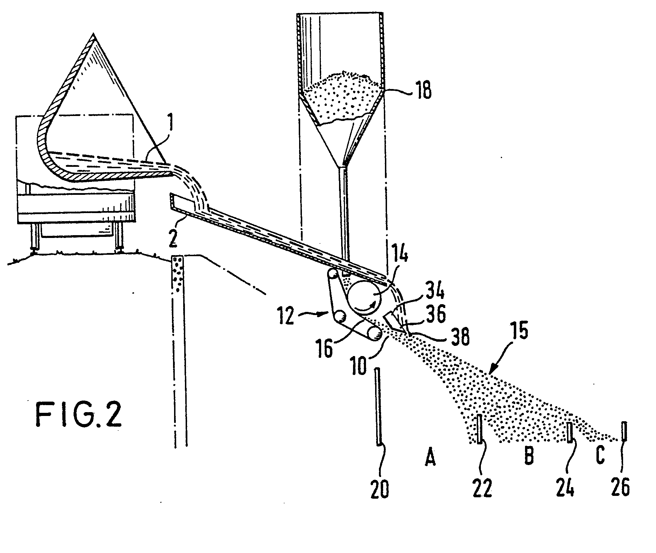

Das Ausführungsbeispiel gemäß Fig. 2 unterscheidet sich dadurch von demjenigen gemäß Fig. 1, daß eine Prallplatte 34 verwendet wird, deren unterer Abschnitt 36 keilförmig ausgebildet ist und die in dem Winekl zwischen Schmelzestrahl und Strömung 10 angeordnet ist. Durch diese Ausbildung und Anordnung der Prallplatte 34 wird erreicht, daß die Strömung 10 auf den Schmelzestrahl 38, der durch die Prallplatte 34 zu einem dünnen Film verbreitert wird, unmittelbar beim Ablösen von der Prallplatte 34 trifft. Der Schmelzestrahl 38 hat daher praktisch keine Möglichkeit, sich infolge der hohen Oberflächenspannung der Schmelze 1 wieder auf einen kreisförmigen oder annähernd kreisförmigen Querschnitt zusammenzuziehen. Der filmförmig verbreitere Schmelzestrahl 38 wird vielmehr unmittelbar nach Verlassen des keilförmigen vorderen Abschnitts 36 der Prallplatte 34 von der Strömung 10 erfaßt und von dieser mindestens teilwiese mitgenommen. Durch diese Mitnahme durch die eine wesentlich höhere Geschwindigkeit aufweisende Strömung 10 wird der Schmelzestrahl 38 nicht nur in Richtung der Strömung 10 abgelenkt bzw. umgebogen, sondern auch auseinandergezogen, wodurch die Bildung eines relativ feinkörnigen Granulats erleichtert wird. Obwohl es sich ind er Praxis kaum erreichen läßt, daß die Strömung 10 unmittelbar an der unteren Kante der Prallplatte 34 auf den Schmelzestrahl 38 trifft, sollte der Abstand zwischen der unteren Kante der Prallplatte und der Stelle, wo die Strömung 10 auf den Schmelzestrahl auftrifft, möglichst gering sein. Dieser Abstand wird erfindungsgemäß vorzugsweise kleiner 10 cm, insbesondere kleiner 5 cm gewählt werden. Dies gilt auch für die Anordnung gemäß dem Ausführungsbeispiel nach Fig. 1. Die übrigen Bezugsziffern der Fig. 2 bezeichnen Teile, die mit den entsprechenden Teilen der Fig. 1 übereinstimmen, so daß eine nähere Erläuterung dieser Bezugsziffern nicht erforderlich ist. Die Prallplatte 34 wird vorzugsweise mit einer Frequenz von 100 oder 200 Hertz in Vibrationen parallel zu ihrer Prallfläche versetzt, wobei die Schwingungen vorzugsweise senkrecht zur Zeichenebene erfolgen, d.h. parallel zur spitzen Vorderkante des keilförmigen Abschnitts 36. Durch derartige Vibrationen der Prallplatte 34 wird das Ablösen des Schmelzestrahls 38 von der Prallplatte 34 erleichtert.

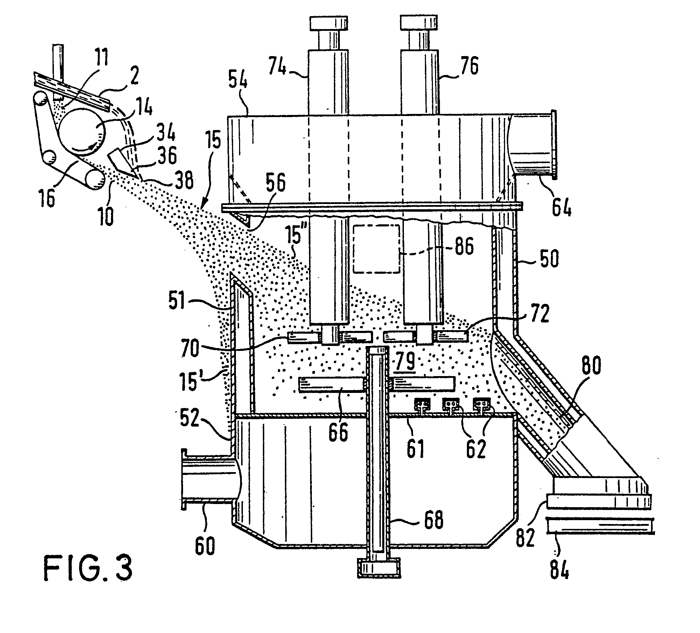

Bei dem Ausführungsbeispiel gemäß Fig. 3 wird das Granulat 15 in analoger Weise wie bei dem Ausführungsbeispiel gemäß Fig. 2 hergestellt, wobei jedoch der linke Teil der Vorrichtung gemäß Fig. 2 weggebrochen ist. Gleiche Teile sind in Fig. 3 ebenfalls mit den gleichen Bezugsziffern wie in Fig. 2 bzw. Fig. 1 versehen. Der Granulatstrom 15 wird bei dem Ausführungsbeispiel gemäß Fig. 3 teilweise in das Innere eines zylinderförmigen doppelwandigen Behälters 50 geleitet. Die Vorderwand 51 des Behälters 50 ist mit einer Öffnung 56 versehen, die vorzugsweise etwa rechteckigen Querschnitt aufweist. Die Vorderwand 51 des Behälters 50 dient dabei als Trennwand, die den Granulatstrom 15 in zwei Teilströme 15' und 15'' unterteilt. Der Behälter 50 weist eine Bodenwanne 52 und ein Kopfteil 54 auf. In die Bodenwanne 52 wird über einen Anschlußstutzen 60 mittels eines nicht dargestellten Gebläses Druckluft zugeführt, die über im Düsenboden 61 vorgesehene Düsen 62 in das Innere des doppelwandig ausgebildeten Behälters 50 geleitet wird, um dort eine fluidisierte Strömung des in das Innere des Behälters 50 gelangenden Granulats 15' aufrechtzuerhalten. Wenn der doppelwandige Behälter 50 einen Innendurchmesser von z.B. 3 m aufweist, kann es zweickmäßig sein, den Düsenboden mit etwa 300 Düsen 62 zu versehen, wobei jede Düse 62 z.B. sechs seitliche Düsenöffnungen aufweisen kann. Über einen derartigen Düsenboden 61 können dem Inneren des Behälters 50 mittels eines geeigneten Gebläses z.B. 500 bis 1000 m³ Luft pro Minute zugeführt werden. Oberhalb der Düsen 62 ist ein Rührer 66 angeordnet, dessen Achse 68 durch den Düsenboden 61 und die Bodenwanne 52 hindurch geführt ist, wobei die Achse 69 vorzugsweise wassergekühlt ist. Des weiteren sind oberhalb des Rührers 66 zwei Rührer 70 und 72 vorgesehen, deren Achsen 74 und 76 sich von oben her in das Innere des Behälters 50 erstrecken. Die Achsen 74 und 76 sind ebenfalls vorgusweise wassergekühlt.

Der Antrieb der Rührer 66, 60, 72 kann mittels nicht dargestellter, mit einer Untersetzung versehenen Elektromotoren erfolgen. Im Inneren des Behälters 50 bildet sich ein allgemein mit der Bezugsziffer 79 bezeichnetes fluidisiertes Bett durch das Zusammenwirken der über die Düsen 62 zugeführten Druckluft mit dem Granulat 15'' aus. Die Rührer 66, 67 und 72 verhindern, daß das Granulat zusammenklumpt. Das Granulat 15'' wird über einen Auslaßkanal 80 einem Sieb 82 zugeführt und nach Absieben von eventuellen Klumpen mittels eines Förderbandes 84 abtransportiert. Die über den Düsenboden 61 zugeführte Druckluft, die bei ihrem Durchgang durch das Wirbelbett 79 infolge ihrer Berührung mit dem heißen Granulat 15'' aufgeheizt worden ist, wird über einen Auslaßstutzen 64 abgeleitet und kann zur Wärmerückgewinnung dienen.

Bei dem Ausführungsbeispiel in Fig. 3 sind die Einlaßöffnung 56 und der Auslaßkanal 80 an sich gegenüberliegenden Seiten des Behälters 50 angeordnet. Es ist jedoch vorteilhafter, die Einlaßöffnung und den Auslaßkanal nicht um 180° versetzt gegeneinander, sondern um etwa 90° versetzt zueinander anzuordnen, um zu verhindern, daß ein Teil des Granulats 15'' unmittelbar zum Auslaßkanal 80 gelangt. Eine um 90° zum Auslaßkanal 80 versetzt angeordnete Einlaßöffnung ist bei 86 angedeutet. Diese Anordnung der Einlaßöffnung bei 86 beitet darüber hinaus den Vorteil, daß das in den Behälter 50 gelangende Granulat 15'' im wesentlichen nicht auf die Achsen 74 und 76

|  | CaO | SiO$_2$ | Al$_2$O$_3$ | MgO | FeO | TiO$_2$ | S | Alkali |
|---|---|---|---|---|---|---|---|---|
| Gew.% | 21,7 | 52,3 | 14,5 | 4,5 | 3,3 | 0,65 | 0,5 | 4,3. |

Die Korngröße des Granulats 15'' war 0—4 mm.

Das Granulat wurde in einer Wanne geschmolzen und auf einem Vierrad-Spinner zu Mineralwolle versponnen.

Beispiel 2

Stahlschlacke wurde nach dem erfindungsgemäßen Verfahren granuliert, wobei für die Strömung 10 gekörntes Material mit einem Durchmesser von 0—4 mm verwendet wurde, das aus einem Gemisch von Schwerlöslichem Rohphosphat, Na$_2$CO$_3$, FeSi und SiO$_2$ im Verhältnis 68:20:5:7 bestand.

Das Verhältnis Schmelze zu festen feinkörnigen Partikeln war 1:1. Der Teil 15' des Granulats wies einen hohen metallischen Anteil auf, aus dem das Metall vorzugsweise magnetisch ausgeschieden wurde. Nach dem Abkühlen und dem magnetischen Entfernen von Metallteilen wurde das Granulat 15'' zu einem thomasmehlartigen Düngemittel feingemahlen, dessen Phosphorgehalt 6,2% betrug, wovon 5,0% in Zitronensäure löslich waren.

Erfindungsgemäß ist es besonders vorteilhaft, eine im wesentlichen aus Stahlschlacke bestehende Schmelze 1 mittels einer Strömung

der Rührer 70 und 72 trifft, sondern zwischen diese hindurch dem fluidisierten Bett 79 zugeführt wird. In der Fig. 3 entspricht die Vorderwand 51 des Behälters 50 der Trennwand 22 in Fig. 1. Bei einer Anordnung der Einlaßöffnungen 86 um 90° zum Auslaßkanal 80 versetzt kann an der der Einlaßöffnung 86 gegenüberliegenden Behälterwand des Behälters 50 ein weiterer nicht dargestellter Auslaß vorgesehen sein, der es ermöglicht, daß der der Fraktion C in Fig. 1 entsprechende Teil des Granulats, der in erster Linie aus nicht an das Granulat gebundenen Partikeln der Strömung 10 besteht, aus dem Behälter 50 heraustreten und gesondert vom übrigen Granulat abgeführt werden kann.

Im folgenden werden Beispiele für den Betrieb der Vorrichtung gemäß Fig. 3 gegeben:

Beispiel 1

Hochofenschlacke wurde nach dem erfindungsgemäßen Verfahren granuliert, wobei granitmehl mit einer Körnung von 0—2 mm als feinkörnige, feste Partikel 11 der Strömung 10 dienten. Das Gewichtsverhältnis von Schmelze zu Partikeln war 1:1. Der Granulatstrom wurde in ein Wirbelbett 79 eingeführt mit einem Durchmesser von 3 m. Dem Wirbelbett wurden 600 m$^3$ Luft pro Minute über den Düsenboden 61 zugeführt. Das Granulat hatte beim Verlassen des Wirbelbettes 79 eine Temperatur von 540°C und folgende Zusammensetzung:

10 zu granulieren, die feinkörnige, feste Partikel 11 aufweist, die mindestens teilweise aus Kalkstein (CaCO$_3$) bestehen. Die Metalleinschlüsse, die insbesondere im Bereich der Fraktion A bzw. 15' anfallen, sind dann mit Kalkstein-Partikeln, die wegen der hohen Temperatur der Schmelze zumindest zum Teil in gebrannten Kalk (CaO) überführt sind, vermischt, was für die Wiederverwendung der Metalleinschlüsse bei der Stahlerzeugung besonders vorteilhaft ist, da bei der Stahlerzeugung neben Kohle ohnehin Kalkstein und gebrannter Kalk zugegeben werden. Darüberhinaus bietet die vorgenannte Zugabe von Kalkstein-Partikeln den Vorteil, daß ohne zusätzliche Energiezufuhr ein großer Teil des Kalksteins in gebrannten Kalk überführt wird. Weiter kann es vorteilhaft sein, wenn neben Kalkstein-Partikeln auch Partikel ausgebrannten Kalks (CaO) der Strömung 10 zugemischt werden.

Bei den Ausführungsbeispielen gemäß Fig. 1 bis 3 wird die Schmelze 1 aus einer offenen Pfanne in eine geneigte Rinne 2 gegossen und fließt als beschleunigter Strahl gegen eine Prallplatte 4 bzw. 34, die den Schmelzestrahl zu einem Film 8 bzw. 38 verbreitert. Der Film 8 ist in Fig. 1 im wesentlichen senkrecht nach unten gerichtet, während der Film 38 in Fig. 2 und 3 eine gewisse Neigung gegen die Vertikale aufweist. Um günstigere räumliche Abmessungen der erfindungsgemäßen Vorrichtung zum Granulieren zu erzielen und/oder die Reaktionszeit zwischen Schmelze und Strömung 10 zu verlängern und/oder die Abkühlzeit des Granulats 15 zu verlängern, kann man erfindungsgemäß den Schmelzestrahl bzw. die Schmelzestrahlen etwa horizontal oder schräg nach oben richten. Hierzu kann es zweckmäßig sein, einen Behälter für die Schmelze 1 zu wählen, der im Bodenbereich eine oder mehrere düsenförmige, insbesondere schlitzdüsenförmige Öffnungen für den Austritt von Schmelzestrahlen aufweist, wobei auf die im Behälter befindliche Schmelze, z.B. mittels Druckgas, ein Überdruck aufbringbar ist, so daß die Schmelze aus den genannten Düsenöffnungen unter Druck ausströmt und die austretenden Schmelzestrahlen horizontal oder schräg nach oben gerichtet werden können. Bei dieser abgewandelten Vorrichtung wird der Strömung 10 eine entsprechende Richtung gegeben, so daß der Auftreffwinkel a zwischen Schmelzestrahl und Strömung 10 auch in diesem Fall vorzugsweise einen spitzen Winkel, vorteilhafterweise zwischen etwa 10° und 50° bildet. Durch schräg nach oben, z.B. unter 45° bis 70° nach oben gegen die Horizontale, gerichtete Schmelzestrahlen und eine entsprechend gerichtete Strömung 10 kann eine wurfparabelförmige Verteilung des Granulats bei günstigen räumlichen Abmessungen der Vorrichtung erzielt werden. Dabei kann es vorteilhaft sein, die Anordnung so zu treffen, daß die Schmelzestrahlen und die Strömung 10 in enem geschlossenen Behälter aufeinandertreffen. Dieser Behälter kann dann eine Schutzgas-, insbesondere eine Argonatmosphäre aufweisen. Auch kann es, insbesondere beim Granulieren von Metallschmelzen, vorteilhaft sein, wenn die Strömung 10 ausschließlich aus Druckluft oder einem Druckgas, insbesondere einem Inertgas, z.B. Argon, besteht, das eine geringe Löslichkeit in der zu granulierenden Metallschmelze aufweist. Bei Verwendung eines Inertgases zum Herstellen der Strömung 10 treten die in der Metallschmelze eingeschlossenen Gase beim Eintritt der Schmelze in die Inertgasströmung aus und tragen dadurch zum Zerspritzen und Granulieren der Schmelze bei. Die hierbei stattfindenden Vorgänge sind in dem US Patent 2 826 489 (Wagner) näher erläutert. Auch bei horizontal oder schräg nach oben gerichteten Schmelzestrahlen kann das Granulat in unterschiedlichen Fraktionen in Abhängigkeit von der Entfernung von der Stelle des Zusammentreffens von Schmelzestrahlen und Strömung 10 aufgefangen werden. Die Trennwände 20, 22, 24 und 26 werden dabei zweckmäßigerweise nicht nur in der gemeinsamen Ebene von Schmelzestrahl und Strömung 10 hintereinander gestaffelt angeordnet, sondern auch seitlich von dieser Ebene in unterschiedlichem Abstand von der Stelle des Zusammentreffens von Schmelzestrahlen und Strömung 10 angeordnet, um die beim Zerspritzen bzw. Zerteilen der Schmelze von der genannten Ebene seitlich weiter nach außen gelangenden, weniger schweren, z.B. verunreinigten, Granulatkörner besser von den schwereren, rein metallischen Granulatkörnern zu trennen. Hierzu können die senkrechten Trennwände 22, 24 und 26 auf der horizontalen Auffangfläche für das Granulat längs etwa oval verlaufenden Linien befestigt werden, wobei die Längsachsen dieser ovalen Linien in der durch den Schmelzestrahl und die Strömung 10 definierten Ebene liegen und die kurzen Achsen dieser ovalförmigen Linien sich etwa senkrecht zu dieser Ebene erstrecken.

**Patentansprüche**

1. Verfahren zum Granulieren von Schlackenschmelzen, Glasschmelzen, Keramikschmelzen, Metallschmelzen und Schmelzen aus Metallegierungen, insbesondere von Hochofenschlackenschmelzen, durch Zusammentreffen eines Schmelzestrahls mit einer Strömung aus feinkörnigen festen Partikeln und/oder Gas, dadurch gekennzeichnet, daß die flüssige Schmelze zu einem dünnen, sich in vorbestimmter Richtung frei bewegenden Schmelzestrahl verbreitert und auseinandergezogen wird und daß die Schmelze in diesem verbreiterten und auseinandergezogenen Zustand durch Zusammentreffen unter einem vorbestimmten Auftreffwinkel (a) mit einer eine im wesentlichen einheitliche Strömungsrichtung und eine hohe Geschwindigkeit relativ zu dem Schmelzestrahl aufweisenden sich im wesentlichen frei bewegenden Strömung aus feinkörnigen festen Partikeln und/oder Gas, insbesondere Schutzgas, in ein sich zumindest über einen Teilbereich des Gegenwinkels (b) zum Auftreffwinkel (a) fächerförmig verteilendes Granulat überführt wird, von dem mindestens eine oder mehrere Fraktionen (15'') mittels eines fluidisierten Bettes (79) aufgefangen werden.

2. Verfahren nach Anspruch 1, dadurch gekennzeichnet, daß das Granulat (15) beim Aufsammeln in Abhängigkeit von der Entfernung zwischen Aufsammelstelle und der Stelle des Zusammentreffens von Schmelzestrahl (8, 38) bzw. Schmelzestrahlen mit der Strömung (10) in Fraktionen (A, B, C) unterteilt wird.

3. Verfahren nach Anspruch 1 oder 2, dadurch gekennzeichnet, daß der Auftreffwinkel (a) zwischen 5° und 90°, vorzugsweise zwischen 20° und 90° liegt.

4. Verfahren nach Anspruch 3, dadurch gekennzeichnet, daß der Auftreffwinkel (a) zwischen 20° und 40° liegt.

5. Verfahren nach Anspruch 3, dadurch gekennzeichnet, daß der Auftreffwinkel (a) zwischen 50° und 70°, insbesondere bei 60° liegt.

6. Verfahren nach einem oder mehreren der Ansprüche 1 bis 5, dadurch gekennzeichnet, daß dem Schmelzestrahl die Form eines dünnen Films (8, 38) mit einer Dicke von weniger als 10 mm, vorzugsweise weniger als 3 mm, insbesondere weniger als 1 mm gegeben wird.

7. Verfahren nach Anspruch 6, dadurch gekennzeichnet, daß die Strömung (10) aus festen, feinkörnigen Partikeln (11) und/oder Gas, insbesondere Schutzgas, gegen eine Flachseite des Schmelzefilms (8, 38) gerichtet wird.

8. Verfahren nach einem oder mehreren der Ansprüche 1 bis 7, dadurch gekennzeichnet, daß die festen feinkörnigen Partikel (11) der Strömung (10) eine Geschwindigkeit zwischen 5 und 100 m/s, vorzugsweise zwischen 5 bis 50 m/s, insbesondere zwischen 10 bis 20 m/s aufweisen und auf und/oder in den Schmelzestrahl hineingeschossen werden.

9. Verfahren nach einem oder mehreren der Ansprüche 1 bis 8, dadurch gekennzeichnet, daß man die Gewichtsmengen so wählt, daß das Gewicht der je Zeiteinheit zugeführten Menge der Festen Partikel (11) zu dem Gewicht der je Zeiteinheit zugeführten Schmelze (1) in einem Verhältnis steht, das zwischen 2:1 und 1:1 liegt.

10. Verfahren nach einem oder mehreren der Ansprüche 1 bis 9, dadurch gekennzeichnet, daß die festen feinkörnigen Partikel (11) der Strömung (10) aus zwei oder mehr unterschiedlichen Materialien und/oder zwei oder mehr unterschiedlichen Kornfraktionen und/oder unterschiedlichen Kornformen bestehen.

11. Verfahren nach einem oder mehreren der Ansprüche 1 bis 10, dadurch gekennzeichnet, daß die festen feinkörnigen Partikel (11) der Strömung aus mindestens einem der Schmelze (1) zuzumischenden Material bestehen und daß das Granulat (15) vorzugsweise ein festes Mischungsverhältnis von Schmelzeanteil und Anteil an feinkörnigen festen Partikeln (11) aufweist, wie es unmittelbar oder nach Hinzumischung von weiterem Material für einen nachfolgenden Behandlungsprozeß, insbesondere einen Mineralwollespinnprozeß, oder für die Düngemittelherstellung erforderlich ist.

12. Verfahren nach einem oder mehreren der Ansprüche 1 bis 11, dadurch gekennzeichnet, daß eine im wesentlichen aus Stahlschlacke bestehende Schmelze (1) mittels einer Strömung (10) granuliert wird, die feinkörnige, feste Partikel (11) aufweise, die mindestens teilweise aus Kalkstein (CaCO₃) und/oder gebranntem Kalk (CaO) bestehen.

13. Verfahren nach einem oder mehreren der Ansprüche 1 bis 12, dadurch gekennzeichnet, daß man die Wärme des Granulats (15) und der noch freien nicht am Granulat (15) gebundenen feinkörnigen festen partikel (11) und gegebenenfalls die auf das fluidisierende Bett (79) übertragene Wärme zurückgewinnt und insbesondere für die Aufrechterhaltung der Partikelströmung (10) und/oder des fluidisierenden Bettes (79) verwendet.

14. Verfahren nach einem oder mehreren der Ansprüche 1 bis 13, dadurch gekennzeichnet, daß der Schmelzestrahl horizontal oder schräg nach oben, vorzugsweise unter einem Winkel von 45° bis 70° zur Horizontalen geneigt, gerichtet wird und daß der Strömung (10) eine entsprechende Richtung gegeben wird.

15. Verfahren nach einem oder mehreren der Ansprüche 1 bis 14, dadurch gekennzeichnet, daß das Zusammentreffen von Schmelzestrahl und Strömung (10) aus feinkörnigen festen Partikeln (11) und/oder Gas, insbesondere Schutz- oder Inertgas, in einem geschlossenen, vorzugsweise unter Schutzgasatmosphäre stehenden Raum, stattfindet.

16. Verfahren nach einem oder mehreren der Ansprüche 1 bis 15, dadurch gekennzeichnet, daß die Schmelze (1) aus einem unter einem erhöhten Druck stehenden Behälter über Düsen, vorzugsweise Schlitzdüsen, ausgespritzt wird.

17. Vorrichtung zum Durchführen des Verfahrens nach einem oder mehreren der Ansprüche 1 bis 16, gekennzeichnet durch eine in den Weg des flüssigen Schmelzestrahls gestellte Prallwand (4, 34) zum Umformen des Schmelzestrahls (2) zu einem dünnen Schmelzefilm (8, 38) sowie durch Einrichtungen (12) zur Beschleunigung der feinkörnigen, festen Partikel und durch ein mindestens einen Teil (15'') des sich fächerförmig verteilenden Granulats (15) auffangendes fluidisiertes Bett (79).

18. Vorrichtung nach Anspruch 17, durch gekennzeichnet, daß die Prallplatte (4, 34) mit einer Vibrationseinrichtung versehen ist, die der Prallplatte (4, 34) in ihrer Plattenebene liegende Schwingungen (6) erteilt.

19. Vorrichtung nach Anspruch 17 oder 18, dadurch gekennzeichnet, daß die Beschleunigungseinrichtung (12) für die feinkörnigen, festen Partikel (11) aus einem Wurfband (16) besteht.

20. Vorrichtung nach einem oder mehreren der Ansprüche 17 bis 19, dadurch gekennzeichnet, daß hinter der Auftreffstelle der Strömung (10) auf den Schmelzefilm (8, 38) unterhalb des sich fächerförmig verteilenden und etwa längs wurfparabelförmiger Bahnen sich bewegenden Granulats (15) Trennwände (20, 22, 24, 26; 51) vorgesehen sind, welche das Granulat (15) in Fraktionen (A, B, C; 15', 15'') unterteilen.

21. Vorrichtung nach einem oder mehreren der Ansprüche 1 bis 20, dadurch gekennzeichnet, daß das fluidisierte Bett (79) einen Düsenboden (61) aufweist, über dessen Düsen (62) Luft, Dampf und/oder Gas, insbesondere Schutzgas zuführbar ist.

22. Vorrichtung nach Anspruch 21, dadurch gekennzeichnet, daß innerhalb des fluidisierten Bettes (79) oberhalb des Düsenbodens (61) Rührer (66, 70, 72) angeordnet sind, deren Achsen (68, 74, 76) sich von oben und/oder unten in das fluidisierte Bett (79) hineinerstrecken und vorzugsweise wassergekühlt sind.

23. Granulat aus Schlackenschmelzen, Glasschmelzen, Keramikschmelzen, Metallschmelzen und Schmelzen aus Metalllegierungen, insbesondere aus Hochofenschlackenschmelzen, das nach dem Verfahren gemäß einem oder mehreren der Ansprüche 1 bis 16 hergestellt ist, dadurch gekennzeichnet, daß es durch Aufschießen auf und/oder Einschießen in die flüssige Schmelze mit dieser verbundene feinkörnige Partikel (11) umfaßt.

24. Granulat nach Anspruch 23, dadurch gekennzeichnet, daß sein Anteil an feinkörnigen Partikeln (11) im Verhältnis zu seinem Anteil an Schmelze (1) in einem vorbestimmten Verhältnis steht.

25. Granulat nach Anspruch 23 oder 24, dadurch gekennzeichnet, daß das die feinkörnigen Partikel (11) bildende Material eine oder mehrere Komponenten umfaßt, von denen mindestens eine mindestens teilweise mit dem Material der Schmelze (1) eine chemische Verbindung eingegangen ist.

## Claims

1. A process for granulating slag melts, glass melts, ceramic melts, metal melts and metals of metal alloys, particularly blast furnace slag melts by meeting of a melt flow with a stream of fine-grained, solid particles and/or gas, characterised in that the liquid melt is widened out and spread out into a thin melt flow moving freely in predetermined direction and that the melt in said spreadout condition, by meeting at a predetermined incidence angle (a) with a stream of fine-grained, solid particles and/or gas, particularly protective gas, flowing substantially freely in a substantially uniform direction at a high rate of flow in relation to the melt flow, is converted into a granulate having a fan-shaped distribution over at least part of the opposite angle (b) to the incidence angle (a), at least one or more fractions (15'') of said granulate are collected by means of a fluidised bed (79).

2. A process as claimed in Claim 1, characterised in that the granulate (15) is divided into fractions (A, B, C) on collection in dependence upon the distance between the point of collection and the point at which the melt flow (8, 38) or melt flows meet(s) the stream (10).

3. A process as claimed in Claim 1 or 2, characterised in that the incidence angle (a) is between 5° and 90° and preferably between 20° and 90°.

4. A process as claimed in Claim 3, characterised in that the incidence angle (a) is between 20° and 40°.

5. A process as claimed in Claim 3, characterised in that the incidence angle (a) is between 50° and 70°, particularly about 60°.

6. A process as claimed in one or more of Claims 1 to 5, characterised in that the melt flow is shaped into a thin film (8, 38) having a thickness of less than 10 mm, preferably less than 3 mm and, more particularly, less than 1 mm.

7. A process as claimed in Claim 6, characterised in that the stream (10) of solid, fine-grained particles (11) and/or gas, particularly protective gas, is directed against one flat side of the melt film (8, 38).

8. A process as claimed in one or more of Claims 1 to 7, characterised in that the solid fine-grained particles (11) of the stream (10) have a flow rate of from 5 to 100 m/s, preferably from 5 to 50 m/s and, more particularly, from 10 to 20 m/s, and are shooted onto and/or into the melt flow.

9. A process as claimed in one or more of Claims 1 to 8, characterised in that the quantities by weight are selected in such a way that the weight of the quantity of solid particles (11) delivered per unit of time and the weight of the melt (1) delivered per unit of time are in a ratio to one another of from 2:1 to 1:1.

10. A process as claimed in one or more of Claims 1 to 9, characterised in that the solid fine-grained particles (11) of the stream (10) consist of two or more different materials and/or two or more different grain fractions and/or different grain forms.

11. A process as claimed in one or more of Claims 1 to 10, characterised in that the solid fine-grained particles (11) of the stream consist of at least one material to be added to and mixed with the melt (1), and in that the granulate (15) preferably has a fixed mixing ratio between the proportion of melt and the proportion of fine-grained solid particles, as required for a following treatment process, particularly a mineral wool spinning process, carried out directly or following the addition of more material, or for the production of fertilisers.

12. A process as claimed in one or more of Claims 1 to 11, characterised in that a melt (1) consisting essentially of steel slag is granulated by means of a stream (10) of fine-grained solid particles (11) which consist at least partly of limestone ($CaCO_3$) and/or quick-lime ($CaO$).

13. A process as claimed in one or more of Claims 1 to 12, characterised in that the heat of the granulate (15) and the free fine-grained solid particles (11) which are not bound to the granulate (15) and, optionally, the heat transferred to the fluidising bed (79) is recovered and used in particular for maintaining the particle stream (10) and/or the fluidising bed (79).

14. A process as claimed in one or more of Claims 1 to 13, characterised in that the melt flow is directed horizontally or obliquely upwards, preferably inclined at an angle of from 45° to 70° relative to the horizontal and in that a corresponding direction is given to the stream (10).

15. A process as claimed in one or more of Claims 1 to 14, characterised in that the melt flow and the stream (10) of fine-grained solid particles (11) and/or gas, particularly protective or inert gas, come into contact with one another in a closed space preferably filled with protective gas.

16. A process as claimed in one or more of Claims 1 to 15, characterised in that the melt (1) is sprayed out from a container under high pressure through jets, preferably slot jets.

17. An apparatus for carrying out the process claimed in one or more of Claims 1 to 16, characterised by a baffle wall (4, 34) arranged in the path of the liquid melt flow for converting the melt flow (2) into a thin melt film (8, 38), as well as by means (12) for acclerating the fine-grained solid particles and by a fluidised bed (79) which collects at least part (15'') of the granulate (15) as it fans out.

18. An apparatus as claimed in Claim 17, characterised in that the baffle plate (4, 34) is provided with a vibration mechanism which imparts to the baffle plate (4, 34) vibrations (6) situated in its plane.

19. An apparatus as claimed in Claim 17 or 18, characterised in that the accelerating unit (12) for the fine-grained solid particles (11) consists of a projection belt (16).

20. An apparatus as claimed in one or more of Claims 17 to 19, characterised in that partitions (20, 22, 24, 26; 51) which divide the granulate (15) into fractions (A, B, C; 15', 15'') are provided behind the point at which the stream (10) impinges on the melt film (8, 38) below the granulate (15) which fans out and moves along substantially trajectory-parabola-like paths.

21. An apparatus as claimed in one or more of Claims 1 to 20, characterised in that the fluidised bed (79) comprises a perforated base (61) through whose jets (62) air, steam and/or gas, particularly a protective gas, may be delivered.

22. An apparatus as claimed in Claim 21, characterised in that stirrers (66, 70, 72) are arranged in the fluidised bed (79) above the perforated base (61), their shafts (68, 74, 76) extending into the fluidised bed (79) from above and/or below and preferably being water-cooled.

23. A granulate of slag melts, glass melts, ceramic melts, metal melts and melts of metal alloys, particularly blast furnace slag melts, produced by the process claimed in one or more of Claims 1 to 16, characterised in that it includes fine-grained particles (11) attached to the liquid melt by projecting onto and/or shooting into the liquid melt.

24. A granulate as claimed in Claim 23, characterised in that the respective proportions of fine-grained particles (11) and melt (1) in the granulate bear a predetermined ratio to one another.

25. A granulate as claimed in Claim 23 or 24, characterised in that the material forming the fine-grained particles (11) includes one or more components of which at least one has entered at least partly into a chemical association with the material of the melt (1).

## Revendications

1. Procédé de granulation de scorie, verre, matières céramiques, métaux et alliages en fusion, notamment de laitier, par l'action d'un jet de fines particules solides et/ou de gaz sur un jet de matière fondue, caractérisé par le fait que le jet de matière fondue est transformé en nappe mince s'écoulant librement dans une direction déterminée et que, sous cette forme de nappe, la matière fondue, au contact avec un jet essentiellement libre de fines particules solides et/ou de gaz, notamment de gaz inerte, sous un angle (a) prédéterminé, ledit jet se déplaçant dans un sens essentiellement uniforme et à une vitesse élevée par rapport à la nappe de matière fondue, est transformée en granules se répartissant en éventail sur au moins une partie de l'angle (b), opposé à l'angle (a), et dont au moins une ou plusieurs fractions (15'') sont captées par un lit de fluidisation (79).

2. Procédé suivant la revendication 1, caractérisé par le fait que les granules sont devisés en différentes fractions (A, B, C) en fonction de la distance entre le point de ramassage de ces granules et le point où se rencontrent le ou les jets de matière fondue (8, 38) et le jet (10).

3. Procédé suivant la revendication 1 ou 2, caractérisé par le fait que l'ouverture de l'angle (a) s'étend de 5° jusqu'à 90°, de préférence de 20° à 90°.

4. Procédé suivant la revendication 3, caractérisé par le fait que l'angle (a) se situe entre 20° et 40°.

5. Procédé suivant la revendication 3, caractérisé par le fait que l'angle (a) a une ouverture entre 50° et 70°, notamment de 60°.

6. Procédé suivant l'une ou plusieurs des revendications 1 à 5, caractérisé par le fait que la matière fondue s'écoule en nappe mince (8, 38) d'une épaisseur inférieure à 10 mm, de préférence inférieure à 5 mm, notamment inférieure à 1 mm.

7. Procédé suivant la revendication 6, caractérisé par le fait que le jet (10) de fines particules solides (11) et/ou de gaz, notamment de gaz inerte, est dirigé sur l'une des faces étendues de la nappe de matière fondue (8, 38).

8. Procédé suivant l'une ou plusieurs des revendications 1 à 7, caractérisé par le fait que les fines particules solides (11) du jet (10) ont une vitesse entre 5 et 100 m/s, de préférence entre 5 et 50 m/s, notamment entre 10 et 20 m/s, et sont projetées sur et/ou dans la nappe de matière fondue.

9. Procédé suivant l'une ou plusieurs des revendications 1 à 8, caractérisé par le fait que le rapport des poids est choisi de sorte que le poids de la quantité de particules solides (11) projetées dans l'unité de temps, et celui de la matière fondue (1) s'écoulant dans l'unité de temps se trouvent dans un rapport qui se situe entre 2:1 et 1:1.

10. Procédé suivant l'une ou plusieurs des revendications 1 à 9, caractérisé par le fait que les fines particules solides (11) formant le jet (10) se composent de deux ou plusieurs matières différentes et/ou de deux ou plusieurs grosseurs différentes de grain et/ou sont de formes différentes.

11. Procédé suivant l'une ou plusieurs des revendications 1 à 10, caractérisé par le fait que les fines particules solides (11) formant le jet (10) se composent d'au moins une matière susceptible de se mélanger à la matière fondue (1) et que les granules (15) comprennent, de préférence en proportion déterminée, la matière fondue et des particules solides (11) comme il est nécessaire directement ou après adjonction d'autres matières pour l'exécution d'opérations de transformation, notamment la fabrication de laine minérale ou d'engrais.

12. Procédé suivant l'une ou plusieurs des revendications 1 à 11, caractérisé par le fait qu'une matière fondue (1) se composant essentiellement de scorie d'acier est granulée à l'aide d'un jet (10) comportant de fines particules solides (11) consistant au moins en partie de carbonate de calcium ($CaCO_3$) et/ou de chaux vive (CaO).

13. Procédé suivant l'une ou plusieurs des revendications 1 à 12, caractérisé par le fait que la chaleur émise par les granules (15) et les fines particules solides (11) libres, non liées aux granules (15), et, le cas échéant, la chaleur transmise au lit de fluidisation (79), sont récupérées et utilisées notamment pour le maintien du jet de particules (10) et/ou du lit de fluidisation (79).

14. Procédé suivant l'une ou plusieurs des revendications 1 à 13, caractérisé par le fait que le jet de matière fondue est dirigé horizontalement ou vers le haut, sous un angle de préférence de 45° à 70° par rapport à l-horizontale, et que le jet (10) est orienté en conséquence.

15. Procédé suivant l'une ou plusieurs des revendications 1 à 14, caractérisé par le fait que la mise en contact de la matière fondue avec le jet (10) de fines particules solides (11) et/ou de gaz, notamment de gaz inerte, se fait dans une enceinte fermée, de préférence sous atmosphère contrôlée.

16. Procédé suivant l'une ou plusieurs des revendications 1 à 15, caractérisé par le fait que la matière fondue (1) est expulsée d'un récipient sous pression assez élevée, à travers des orifices de préférence en forme de fentes.

17. Dispositif pour l'exécution du procédé suivant l'une ou plusieurs des revendications 1 à 16, caractérisé par une chicane (4, 34) placée dans le circuit du jet de matière fondue en vue de transformer ce jet (2) en une nappe mince (8, 38), ainsi que par des organes (12) assurant l'accélération des fines particules solides, et par un lit de fluidisation (79) captant au moins une partie (15'') des granules (15) projetés en éventail.

18. Dispositif suivant la revendication 17, caractérisé par le fait que la chicane (4, 34) est munie d'un vibrateur qui lui imprime des vibrations parallèlement au plan de cette chicane.

19. Dispositif suivant la revendication 17 ou 18, caractérisé par le fait que l'accélérateur (12) des fines particules solides (11) comporte une bande de projection (16).

20. Dispositif suivant l'une ou plusieurs des revendications 17 à 19, caractérisé par le fait qu'en aval du point où se recontrent le jet (10) et la nappe de matière fondue (8, 38) et à une certaine distance au-dessous de l'éventail des granules (15) se dispersant suivant des trajectoires à peu près paraboliques, sont disposées des parois (20, 22, 24, 26; 51) qui répartissent les granules (15) sur différentes fractions (A, B, C; 15', 15'').

21. Dispositif suivant l'une ou plusieurs des revendications 17 à 20, caractérisé par le fait que le lit de fluidisation (79) présente un fond (61) muni de tuyères (62) par lesquelles l'air, la vapeur et/ou un gaz, notamment un gaz inerte, peut être insufflé.

22. Dispositif suivant la revendication 21, caractérisé par le fait que dans le lit de fluidisation (79), au-dessus du fond (61), sont disposés des agitateurs (66, 70, 72) dont les axes (68, 74, 76) pénètrent d'en haut et/ou d'en bas dans le lit (79) et sont de préférence refroidis à l'eau.

23. Granules de scorie, verre, matières céramiques, métaux et alliages fondus, notamment de laitier, obtenus par le procédé suivant l'une ou plusieurs des revendications 1 à 16, et caractérisés par le fait qu'ils comprennent des particules fines (11) projetées sur et/ou dans la matière en fusion et ainsi combinées à elle.

24. Granules suivant la revendication 23, caractérisés par le fait que leur part en particules fines (11) se trouve dans un rapport déterminé avec la part de matière fondue (1).

25. Granules suivant la revendication 23 ou 24, caractérisés par le fait que la matière constituant les particules fines (11) comprend un ou plusieurs composants dont au moins un est entré au moins partiellement en réaction avec la matière fondue (1).

FIG.1

FIG.2

FIG.3